Europäisches Patentamt

**European Patent Office**

**Office européen des brevets**

(19)

(11) Veröffentlichungsnummer: **0 220 371**
**B1**

(12) **EUROPÄISCHE PATENTSCHRIFT**

(45) Veröffentlichungstag der Patentschrift:
06.12.89

(21) Anmeldenummer: 86107979.6

(22) Anmeldetag: 11.06.86

(51) Int. Cl.⁴: **F01N 7/10,** F01N 7/14,
F01N 1/24, F16L 59/14

(54) Verfahren zur Herstellung eines Heissgasführungsbauteils, insbesondere Abgasführungsbauteils für Verbrennungsmotore.

(30) Priorität: 28.09.85 DE 3534757

(43) Veröffentlichungstag der Anmeldung:
06.05.87 Patentblatt 87/19

(45) Bekanntmachung des Hinweises auf die Patenterteilung:
06.12.89 Patentblatt 89/49

(84) Benannte Vertragsstaaten:
AT BE CH DE FR GB IT LI LU NL SE

(56) Entgegenhaltungen:
EP-A- 0 047 525
DE-A- 3 205 186
FR-A- 2 216 511
FR-A- 2 328 914
GB-A- 2 058 918
US-A- 2 937 662
US-A- 3 457 723
US-A- 4 234 054

PATENT ABSTRACTS OF JAPAN, Band 6,
Nr. 213 (M-167)[1091], 26. Oktober 1982; &
JP-A-57 119122 ( TOYOTA JIDOSHA KOGYO K.K.
) 24-07-1982

(73) Patentinhaber: DIDIER-WERKE AG,
Lessingstrasse 16-18, D-6200 Wiesbaden(DE)

(72) Erfinder: Ganz, Rudolf, Dr., Raiffeisenstrasse 18,
D-6500 Mainz 1(DE)
Erfinder: Rausch, Miroslaw, Bärstädterstrasse 16,
D-6208 Bad Schwalbach-Hettenhain(DE)
Erfinder: Baum, Karl, Zwergweg 1,
D-6200 Wiesbaden-Bierstadt(DE)
Erfinder: Wirth, Ludwig, Carl-von-Ossietzky-Strasse 33,
D-6200 Wiesbaden(DE)

(74) Vertreter: Brückner, Raimund Dipl.-Ing.,
Lessingstrasse 16-18, D-6200 Wiesbaden(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines Heißgasführungsbauteils mit einem mit Öffnungen versehenen Innenmantel, einem Außenmantel und einer dazwischen angeordneten Wärmedämmschicht aus keramischem Fasermaterial.

Abgasführungsbauteile, wie Abgaskrümmer oder Abgasrohre von Verbrennungsmotoren für Kraftfahrzeuge bestehen aus Stahlguß oder Aluminium. Die Wärmedämmfähigkeit solcher Abgasführungsbauteile aus Stahlguß ist gering. Dementsprechend trägt der Abgaskrümmer erheblich zur Erhitzung des Motorraumes bei. Soll der Motorraum akustisch gekapselt werden, dann ist in ihm mit einem beträchtlichen Wärmestau zu rechnen.

Wegen der geringen Wärmedämmfähigkeit von Stahlguß-Abgaskrümmern und Abgasrohren werden die Abgase des Verbrennungsmotors abgekühlt. Dies ist dann ungünstig, wenn die Abgase über einen Katalysator oder einen Dieselpartikelfilter gereinigt werden sollen, der eine hohe Betriebstemperatur voraussetzt. Bei Abgasführungsbauteilen mit geringer Wärmedämmfähigkeit und hoher Wärmekapazität wird die Betriebstemperatur der Abgase nur langsam erreicht.

Aus der US-A 4 234 054 ist ein mit Öffnungen versehener Innenmantel im Bereich der Schalldämpfer bekannt, um den eine Fasermatte lose herumgelegt ist. Hierbei ist keinerlei Verbund zwischen dem Innenmantel und der Fasermatte gegeben.

Dehnungsbewegungen, Schwingungen und Pulsationseffekte, die in solchen Bauteilen im Betrieb auftreten, werden zur vorzeitigen Zerstörung der Fasermatte führen.

Auch die Montage der Fasermatten, besonders bei komplizierten Geometrien der Metallteile erscheint aufwendig.

Aufgabe der Erfindung ist es daher, ein Verfahren zur Herstellung eines Heißgasführungsbauteils mit geringer Wärmeabstrahlung vorzuschlagen, das über lange Zeit einsatzbereit und mit geringem Aufwand auch bei komplizierten Formen herstellbar ist.

Erfindungsgemäß ist obige Aufgabe dadurch gelöst, daß der Innenmantel von einem metallischen Sieb, das in Form der Innenkontur des Heißgasführungsbauteils gestaltet ist, gebildet wird, daß das als Innenmantel dienende metallische Sieb als Innenform für im Saugverfahren sich an seiner Außenseite durchgehend im Verbund anlagerndes keramisches Fasermaterial einer flüssigen Zubereitung eingesetzt wird, und daß die Außenmantelteile um die getrocknete und verfestigte Schicht des Fasermaterials gasdicht mittels eines Spannringes durch Verschweißen oder mit einem Dichtungselement verbunden sind.

In bevorzugter Ausführungsform besteht die Wärmdämmschicht aus gebundenem festen Fasermaterial.

Die Wärmeabstrahlung des Heißgasführungsbauteils ist durch die Wärmedämmschicht aus gebundenem festen keramischen Fasermaterial noch wirkungsvoller herabgesetzt, das auch eine sehr niedrige Wärmeleitfähigkeit aufweist. Zugleich wird dabei die Erniedrigung der Heißgastemperatur im Heißgasführungsbauteil vermindert. Eine hohe Abgastemperatur ist für einen Abgaskatalysator, einen Dieselpartikelfilter oder für den Betrieb eines Turboladers günstig. Wegen der geringen Wärmespeicherkapazität des Innenmantels und der Wärmedämmschicht wird nach dem Anlassen des Verbrennungsmotors schnell eine für einen Katalysator oder einen Dieselpartikelfilter gewünschte hohe Betriebstemperatur des Abgases erreicht. Die Wärmedämmschicht aus keramischem Fasermaterial bringt außerdem eine zusätzliche Schalldämmung mit sich.

Die mechanische Befestigung des Heißgasführungsbauteils erfolgt über wenigstens ein Tragelement am Außenmantel, der die Wärmedämmschicht umschließt. Es ist dabei die Befestigung und die Wärmedämmung verschiedenen Bauteilen übertragen, so daß jedes nach den jeweiligen Erfordernissen ausgelegt werden kann.

Ein geteilter Außenmantel läßt sich dabei leicht um die Wärmedämmschicht legen, so daß ein Einschrumpfen eines Keramikbauteils in ein Außenmantelrohr nicht nötig ist. Ein solches Einschrumpfen würde ein mechanisch sehr stabiles Isolationsbauteil voraussetzen. Ein solches hätte jedoch eine hohe Wärmeleitfähigkeit. Es ließe sich nur in geringen Isolierdicken verwirklichen.

Um eine dichte Anlage der Wärmedämmschicht am Außenmantel zu gewährleisten, ist in besonderer Ausgestaltung der Erfindung zwischen der Wärmedämmschicht und dem Außenmantel eine elastische Fasermatte aus keramischen Fasern angeordnet.

Das beschriebene Abgasführungsbauteil weist im Vergleich zu einem Aluminium-Stahlgußteil auch ein nur geringes Gewicht auf.

In bevorzugter Ausgestaltung der Erfindung sind an dem als Innenmantel dienenden metallischen Sieb Abstandshalter befestigt, an denen der Außenmantel ansteht. Es ist dadurch erreicht, daß die Wärmedämmschicht aus keramischem Fasermaterial praktisch keine Kräfte übertragen muß. Das metallische Sieb ist über die Abstandhalter gegen den Außenmantel gehalten.

Ein einfaches und zur Serienfertigung geeignetes Verfahren zur Herstellung eines Abgasführungsbauteils zeichnet sich dadurch aus, daß das metallische Sieb in Form der Innenkontur des Abgasführungsbauteils geformt wird, daß das metallische Sieb als Innenform für im Saugverfahren sich an seiner Außenseite durchgehend im Verbund anlagerndes keramisches Fasermaterial einer flüssigen Zubereitung eingesetzt wird und daß die Außenmantelteile um die getrocknete und verfestigte Schicht des Fasermaterials und gegebenenfalls die aufgelegte elastische Fasermatte gespannt werden.

Günstig ist dabei, daß das metallische Sieb einerseits als Innenform für das Saugverfahren dient, in dem die Flüssigkeit der Zubereitung durch die Löcher bzw. Schlitze abgezogen wird, so daß sich die keramischen Fasern außen am Rohr anlagern. Andererseits ist das metallische Sieb am fertigen Bauteil zugleich der Innenmantel und bietet dabei für das Heißgas eine überwiegend metallische Heißgasführungsfläche.

Die Erfindung läßt sich aber nicht nur bei Abgaskrümmern oder Abgasrohren für einen Verbrennungsmotor einsetzen. Sie ist auch für andere Heißgasleitungen geeignet.

Weitere vorteilhafte Ausgestaltungen der Erfindung ergeben sich aus den Unteransprüchen und der folgenden Beschreibung eines Ausführungsbeispiels. In der Zeichnung zeigen:

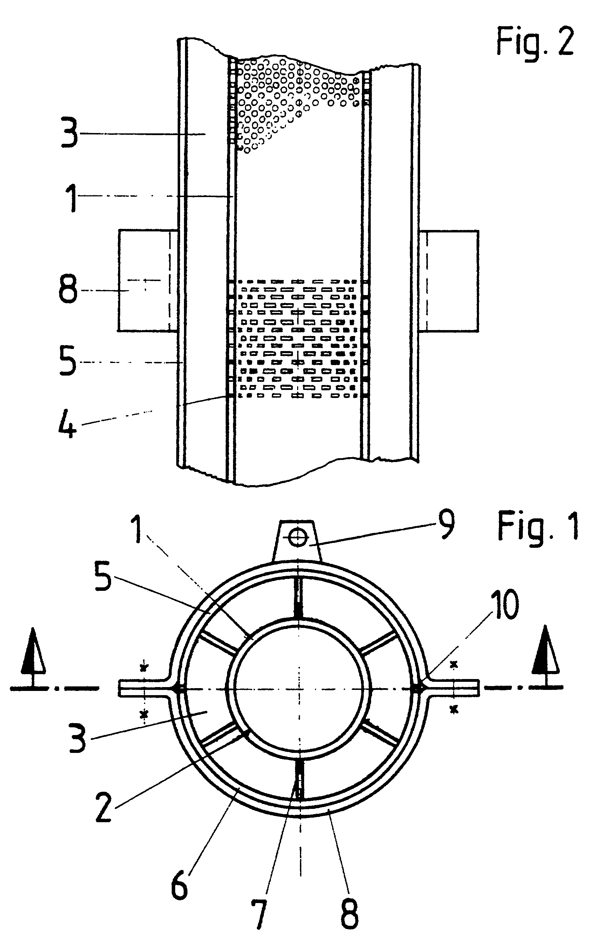

Figur 1 ein Abgasführungsrohr im Querschnitt und

Figur 2 einen Längsschnitt längs der Linie II–II nach Figur 1.

Ein Abgasrohr weist einen Innenmantel auf, der von einem metallischen Sieb 1 gebildet ist. Das Sieb 1 ist hierfür in der Art gebogen, daß die Ränder an einer Naht 2 miteinander verbunden sind. Das Sieb 1 ist im Verbund von einer Wärmedämmschicht aus keramischem Fasermaterial 3 umgeben. Der Durchmesser der Schlitze bzw. Löcher 4 des Siebes 1 sind kleiner als die Länge der Fasern des Fasermaterials 3. Er liegt beispielsweise zwischen 0,5 mm und 2 mm. Insgesamt ist die Fläche, die die Löcher bzw. Schlitze 4 des metallischen Siebes 1 einnehmen, wesentlich kleiner als die Metallfläche des Siebes 1. Die Wärmedämmschicht 3 ist wesentlich dicker als die Wandstärke des Außenmantels 5, 6 und des metallischen Siebes 1. Diese Wärmedämmschicht 3 haftet durchgehend an dem Sieb 1.

Die aus dem keramischen Fasermaterial 3 bestehende Wärmedämmschicht ist von einem Außenmantel umschlossen, der z.B. aus zwei in Achsrichtung des Rohres geteilten Außenmantelteilen 5 und 6 besteht. Diese sind aus Stahlblech gestanzt und entsprechend vorgeformt. Die Außenmantelteile 5, 6 sind z.B. entweder miteinander verschweißt oder durch Einlegen eines Dichtungselements 10 miteinander dicht verbunden. Für beide Maßnahmen ist die niedrige Temperatur am Außenmantel 5, 6 vorteilhaft.

Zwischen dem metallischen Sieb 1 und den Außenmantelteilen 5 und 6 erstrecken sich Abstandhalter 7, die im Fasermaterial 3 eingebettet sind. Mittels wenigstens eines Spannringes 8 sind die schalenförmigen Außenmantelteile 5 und 6 an die Abstandhalter 7 gedrückt. An wenigstens dem einen Außenmantelteil 5 oder an dem Spannring 8 ist als Trageelement für das Abgasrohr eine Lasche 9 befestigt.

Günstig bei dem beschriebenen Aufbau des Innenmantels aus einem Sieb 1 und des Außenmantels aus Außenmantelteilen 5 und 6 ist auch, daß sich durch entsprechende Formung des Siebes 1 und der Außenmantelteile 5 und 6 auf einfache Weise auch Abgaskrümmer schaffen lassen, mit denen aus mehreren Motorzylindern das Abgas in ein gemeinsames Abgasrohr zusammenzuführen ist.

Das beschriebene Abgasführungsrohr weist bei geringem Gewicht eine hohe Wärmedämmung und geringe Wärmespeicherkapazität auf, so daß das Sieb 1 durchströmendes heißes Abgas wenig Wärme über den Außenmantel 5, 6 abstrahlt und nicht wesentlich abgekühlt wird. Die notwendige Abgasabdichtung wird durch den Außenmantel 5, 6 erreicht, wobei an den Stoßstellen zwischen den Außenmantelteilen 5 und 6 infolge deren Verschweißung bzw. infolge des Dichtungselements 10 Abgas nicht in die Umgebung austritt. Die Haltefunktion für das Abgasrohr übernimmt über den Spannring 8 bzw. die Lasche 9 der Außenmantel 5, 6. Auf die Abgasströmung im Sieb 1 zurückzuführende Pulsations-, Stoß- oder Rüttelbewegungen werden über die Abstandhalter 7 auf die Außenmantelteile 5 bzw. 6 übertragen, so daß die vom Fasermaterial 3 gebildete Wärmedämmschicht dadurch nicht zerstört wird. Falls dabei eine besondere Geräuschentwicklung entsteht, können die Abstandhalter 7 schalldämpfend ausgebildet werden oder es kann zwischen die vom Fasermaterial 3 gebildete Wärmedämmschicht und die Außenmantelteile 5 und 6 eine elastische Fasermatte eingelegt werden, welche dann nicht nur Rüttelbewegungen zwischen dem Sieb 1 und den Außenmantelteilen 5, 6 dämpft, sondern auch eine dichte, nachgiebige Anlage der Außenmantelteile 5, 6 an der vom keramischen Fasermaterial gebildeten Wärmedämmschicht gewährleistet, wodurch zwangsläufig auftretende Toleranzen ausgeglichen werden.

Das beschriebene Abgasrohr oder ein Abgaskrümmer lassen sich etwa in folgender Weise herstellen:

Zunächst wird ein zugeschnittenes Siebstück in die gewünschte Form der Innenkontur des Abgasführungsbauteils gebracht. Anschließend wird dieses mit einem Flansch und den ring- oder stegförmigen Abstandhaltern 7 versehen und dann in eine flüssige Zubereitung in der die keramischen Fasern schweben, eingesetzt. Der Zubereitung aus keramischen Fasern kann ein chemisches oder keramisches Bindemittel zugesetzt werden, um der Wärmedämmschicht die notwendige Stabilität zu geben und zu verhindern, daß Fasern mit dem Abgasstrom durch die Löcher bzw. Schlitze 4 ausgetragen werden.

Danach wird dann über den Flansch die Flüssigkeit in einem Vakuumsaugverfahren abgesaugt, so daß sich die keramischen Fasern außen am Sieb 1 ablagern. Die Löcher bzw. Schlitze 4 sind so groß bemessen, daß ein Absaugen der Fasern nicht möglich ist.

Ist die gewünschte Dicke des am metallischen Sieb 1 abgelagerten Fasermaterials 3 erreicht, dann erfolgt ein Trocknungsvorgang, damit sich die vorgesehene Faserbindung stabilisiert.

Danach können dann die Außenmantelteile 5 und 6 auf das Fasermaterial 3 bzw. die Abstandhalter 7 aufgelegt werden. Dies kann schon dann erfolgen, wenn die Schicht des Fasermaterials 3 noch nicht ganz ausgehärtet ist, so daß sich das Fasermaterial 3 an die vorgeformte Kontur der Außenmantelteile 5, 6 anpaßt.

Schließlich werden die Außenmantelteile 5, 6 mittels des bzw. der Spannringe 8 gegeneinander verspannt. Ist eine elastische Fasermatte vorgesehen, dann wird diese um die Schicht des Fasermaterials 3 gelegt, bevor die Außenmantelteile 5 und 6 aufgelegt werden.

Bei geometrisch komplizierten Gestaltungen des Abgasführungsbauteils kann das Sieb 1 und der Außenmantel aus mehreren entsprechend vorgeformten Einzelteilen bestehen. Entsprechend werden die Spannringe 8 und die Trageelemente 9 gestaltet und angeordnet.

## Patentansprüche

1. Verfahren zur Herstellung eines Heißgasführungsbauteils mit einem mit Öffnungen versehenen Innenmantel, einem Außenmantel und einer dazwischen angeordneten Wärmedämmschicht aus keramischen Fasermaterial, dadurch gekennzeichnet, daß der Innenmantel von einem metallischen Sieb (1), das in Form der Innenkontur des Heißgasführungsbauteils gestaltet ist, gebildet wird, daß das als Innenmantel dienende metallische Sieb (1) als Innenform für im Saugverfahren sich an seiner Außenseite durchgehend im Verbund anlagerndes keramisches Fasermaterial (3) einer flüssigen Zubereitung eingesetzt wird, und daß die Außenmantelteile (5, 6) um die getrocknete und verfestigte Schicht des Fasermaterials (3) gasdicht mittels eines Spannringes (8) durch Verschweißen oder mit einem Dichtungselement (10) verbunden sind.

2. Verfahren zur Herstellung eines Heißgasführungsbauteils nach Anspruch 1, dadurch gekennzeichnet, daß die Wärmedämmschicht (3) aus gebundenem festen keramischen Fasermaterial besteht.

3. Verfahren zur Herstellung eines Heißgasführungsbauteils nach den Ansprüchen 1 und 2, dadurch gekennzeichnet, daß zwischen der Wärmedämmschicht (3) und dem Außenmantel (5, 6) eine elastische Fasermatte aus keramischen Fasern angeordnet ist.

4. Verfahren zur Herstellung eines Heißgasführungsbauteils nach den Ansprüchen 1 bis 3, dadurch gekennzeichnet, daß an dem als Innenmantel dienenden metallischen Sieb (1) Abstandshalter (7) befestigt sind, an denen der Außenmantel (5, 6) ansteht.

5. Verfahren zur Herstellung eines Heißgasführungsbauteils nach den Ansprüchen 1 bis 4, dadurch gekennzeichnet, daß die Wärmedämmschicht (3) wesentlich dicker als die Wandstärke des Außenmantels (5, 6) und des metallischen Siebes (1) ist.

6. Verfahren zur Herstellung eines Heißgasführungsbauteils nach den Ansprüchen 1 bis 5, dadurch gekennzeichnet, daß die Fläche der Löcher bzw. Schlitze des metallischen Siebes (1) wesentlich kleiner als dessen Metallfläche ist.

7. Verfahren zur Herstellung eines Heißgasführungsbauteils nach den Ansprüchen 1 bis 6, dadurch gekennzeichnet, daß die Außenmantelteile (5, 6) gestanzt und geformt sind.

## Claims

1. Method for manufacture of a hot gas conduit with an inner wall provided with openings, an outer wall and a thermally insulating layer of ceramic material arranged therebetween, characterised in that the inner wall is formed by a metallic sieve (1) that is constructed in the shape of the inner contour of the hot gas conduit, that the metallic sieve (1) serving as the inner wall is used as the inner mould for the ceramic fibre material of a liquid preparation deposited continuously as a composite on its outer side in a suction process and that the outer wall parts (5, 6) are connected in a gastight manner around the dried and solidified layer of the fibre material (3) by means of a tension ring (8) by welding or by a sealing element (10).

2. Method for manufacture of a hot gas conduit according to Claim 1, characterised in that the insulating layer (3) consists of bonded strong ceramic fibre material.

3. Method for manufacture of a hot gas conduit according to Claims 1 and 2, characterised in that an elastic fibre mat of ceramic fibres is arranged between the thermally insulating layer (3) and the outer wall (5, 6).

4. Method for manufacture of a hot gas conduit according to Claims 1 to 3, characterised in that spacers (7) are fixed to the metallic sieve (1) serving as the inner wall, which spacers are engaged by the outer wall (5, 6).

5. Method for manufacture of a hot gas conduit according to Claims 1 to 4, characterised in that the insulating layer (3) is substantially thicker than the wall thickness of the outer wall (5, 6) and of the metallic sieve (1).

6. Method for manufacture of a hot gas conduit according to Claims 1 to 5, characterised in that the area of the holes or slits of the metallic sieve (1) is substantially smaller than its metallic area.

7. Method for manufacture of a hot gas conduit according to Claims 1 to 6, characterised in that the outer wall parts (5, 6) are stamped and shaped.

## Revendications

1. Procédé de fabrication d'un élément de construction pour le guidage de gaz chauds, comprenant une enveloppe intérieure pourvue d'orifices, une enveloppe extérieure et une couche d'isolation thermique disposée entre les deux enveloppes et composée d'un matériau fibreux céramique, caractérisé en ce que l'enveloppe intérieure est formée par un tamis métallique (1) ayant la forme du contour intérieur de l'élément de construction pour le guidage de gaz chauds, en ce que le tamis métallique (1) servant d'enveloppe intérieure est utilisé, comme forme intérieure, pour le matériau fibreux céramique (3) d'une préparation liquide, matériau qui dans un procédé par aspiration, se dépose de manière continue, en constituant un composite, sur la face extérieure du tamis, et en ce que les parties de l'enveloppe extérieure (5, 6) sont reliées entre elles autour de la couche séchée et durcie du matériau fibreux (3), de manière étanche au gaz, à l'aide d'une bague de serrage (8), par soudure ou par un élément d'étanchéité (10).

2. Procédé de fabrication d'un élément de construction pour le guidage de gaz chauds selon la revendication 1, caractérisé en ce que la couche d'isolation thermique (3) se compose d'un matériau fibreux céramique compact et lié.

3. Procédé de fabrication d'un élément de construction pour le guidage de gaz chauds selon les revendications 1 et 2, caractérisé en ce qu'un mat de fibres élastique en fibres céramiques est disposé entre la couche d'isolation thermique (3) et l'enveloppe extérieure (5, 6).

4. Procédé de fabrication d'un élément de construction pour le guidage de gaz chauds selon les revendications 1 à 3, caractérisé en ce que des entretoises (7), sur lesquelles appuie l'enveloppe extérieure (5, 6), sont fixées sur le tamis métallique (1) servant d'enveloppe intérieure.

5. Procédé de fabrication d'un élément de construction pour le guidage de gaz chauds selon les revendications 1 à 4, caractérisé en ce que la couche d'isolation thermique (3) est beaucoup plus épaisse que les parois de l'enveloppe extérieure (5, 6) et du tamis métallique (1).

6. Procédé de fabrication d'un élément de construction pour le guidage de gaz chauds selon les revendications 1 à 5, caractérisé en ce que la surface des trous ou des fentes du tamis métallique (1) est beaucoup plus faible que sa surface métallique.

7. Procédé de fabrication d'un élément de construction pour le guidage de gaz chauds selon les revendications 1 à 6, caractérisé en ce que les parties d'enveloppe extérieure (5, 6) sont estampées et mises en forme.

Fig. 2

3

1

8

5

4

Fig. 1

1

5

9

10

3

2

6

7   8